# EUROPEAN PATENT APPLICATION

(11) **EP 4 498 442 A2**
(43) Date of publication of application: **29.01.2025**
(21) Application number: 24186420.6
(22) Date of filing: 04.07.2024
(51) Int. Cl.: H01M 4/13, H01M 4/505, H01M 4/525

(54) **ELECTRODE AND RECHARGEABLE BATTERY INCLUDING THE SAME**

(30) Priority: 27.07.2023 KR 20230098389
(71) Applicant: Samsung SDI Co., Ltd, Gyeonggi-do 17084 (KR)
(72) Inventor: Han, Da-Un, 17084 Gyeonggi-do (KR); Choi, Mingu, 17084 Gyeonggi-do (KR); Jang, Hyeyeon, 17084 Gyeonggi-do (KR); Ha, Eunhyeon, 17084 Gyeonggi-do (KR); Kim, Yuhyun, 17084 Gyeonggi-do (KR); Park, Yong-Kyun, 17084 Gyeonggi-do (KR)
(74) Representative: Michalski Hüttermann & Partner Patentanwälte mbB

(57) **Abstract**

A positive electrode for a battery includes a substrate, and a positive active material layer on at least one surface of the substrate, wherein a pore ratio of the positive active material layer is 11 volume% to 16 volume%, and an average diameter D50 of particles is 8µm to 20µm.

## Description

### BACKGROUND

### 1. Field of the Disclosure

Embodiments of the present disclosure relate to an electrode and a rechargeable battery including the same.

### 2. Description of the Related Art

The desire and demand for rechargeable batteries as an energy source have increased based on the development and demand for mobile devices.

Rechargeable batteries may be formed by immersing an electrode assembly formed by placing electrodes on both sides of a separator and wound into a jelly roll shape, or an electrode assembly formed by stacking sheet-shaped electrodes and separators, in a case together with an electrolyte solution, and then closing and sealing the case with a cap assembly.

Currently, with the development of automobiles (e.g., electric vehicles), high-capacity designs with relatively high energy densities and relatively rapid charging characteristics are desired/required to satisfy the characteristics of rechargeable batteries utilized in automobiles.

For high-capacity characteristics, a material with relatively high specific capacity is applied or an amount of an active material applied on the substrate is increased by relatively high loading to form (or provide) a thick film, but as the film thickness increases, it becomes difficult to secure electrode adhesion or conductivity, ultimately leading to problems with deterioration of battery performance and deterioration of rapid charging characteristics.

### SUMMARY

Aspects of one or more embodiments of the present disclosure relate to an electrode that can secure high energy density and concurrently (*e.g*., simultaneously) secure rapid charging characteristics, and a rechargeable battery including the same.

A positive electrode for a battery according to one or more embodiments of the present disclosure includes a substrate and a positive active material layer formed on at least one surface of the substrate, wherein a pore ratio of the positive active material layer is 11 volume percent (volume%) to 16 volume%, and an average diameter D50 of particles is 8 micrometers (µm) to 20 µm.

The pore ratio is defined as the ratio of the volume of pores to the volume of the positive active material layer given in volume percent (volume%).

In one or more embodiments, a loading level (L/L) of the positive active material layer may be 40 mg/cm² to 60 mg/cm².

In one or more embodiments, the positive active material layer may include a first pore and a second pore of different sizes, and a diameter of the first pore is 0.2 µm to 0.5 µm.

In one or more embodiments, the first pore may be 55 volume% to 65 volume% of the entire pore volume included in the positive active material layer.

In one or more embodiments, a compression ratio of the positive active material layer may be 69 volume% to 73 volume% (e.g., 69:100 to 73:100).

In one or more embodiments, the substrate may include aluminum.

A rechargeable battery according to one or more embodiments of the present disclosure includes an electrode assembly including the positive electrode for the battery, a case that accommodates the electrode assembly, an electrolyte filled in the case, and a cap assembly that is coupled to the case and seals the case.

In one or more embodiments of the present disclosure, electrodes, secondary cells including the electrodes capable of rapid charging, and the rechargeable battery including the same may be provided to increase energy density by performing high loading and thus improving movement characteristics of ions.

### BRIEF DESCRIPTION OF THE DRAWINGS

FIG. 1 is a schematic cross-sectional view of a positive electrode for a rechargeable battery according to one or more embodiments of the present disclosure.
FIG. 2 is a graph measuring an amount of precipitation depending on a compression ratio of a positive active material layer according to one or more embodiments of the present disclosure.
FIG. 3 is a graph measuring a pore ratio and a compression ratio of a positive active material layer according to one or more embodiments of the present disclosure.
FIG. 4 is a schematic perspective view of a rechargeable battery according to one or more embodiments of the present disclosure.
FIG. 5 is a cross-sectional view taken along the line V-V' of FIG. 4, according to one or more embodiments of the present disclosure.
FIG. 6 is a schematic exploded perspective view of a rechargeable battery according to one or more embodiments of the present disclosure.

### DETAILED DESCRIPTION

The present disclosure may be modified in many alternate forms, and thus specific embodiments will be illustrated in the drawings and described in more detail. It should be understood, however, that this is not intended to limit the present disclosure to the particular forms disclosed, but rather, is intended to cover all modifications, equivalents, and alternatives falling within the scope of the present disclosure. The present disclosure will be described more fully hereinafter with reference to the accompanying drawings, in which example embodiments of the disclosure are shown.

The drawings and description are to be regarded as illustrative in nature and not restrictive. Rather, these embodiments are provided as examples so that this disclosure will be thorough and complete, and will fully convey the aspects and features of the present disclosure to those skilled in the art. Accordingly, processes, elements, and techniques that are not necessary to those having ordinary skill in the art for a complete understanding of the aspects and features of the present disclosure may not be described.

Like reference numerals designate like elements throughout the specification, and duplicative descriptions thereof may not be provided.

In the drawings, the thickness of layers, films, panels, regions, and/or the like, may be exaggerated for clarity. In addition, in the drawings, for better understanding and ease of description, the thickness of some layers and areas may be exaggerated.

It will be understood that when an element, such as a layer, film, region or substrate, is referred to as being "on," "connected to," or "coupled to" another element, it can be directly on, connected to, or coupled to the other element, or one or more intervening elements may be present. In addition, it will also be understood that when an element is referred to as being "between" two elements, it can be the only element between the two elements, or one or more intervening elements may also be present.

It will be understood that, although the terms "first," "second," "third," etc., may be used herein to describe various elements, components, regions, layers and/or sections, these elements, components, regions, layers and/or sections should not be limited by these terms. These terms are used to distinguish one element, component, region, layer or section from another element, component, region, layer or section. Thus, a first element, component, region, layer or section described below could be termed a second element, component, region, layer or section, without departing from the scope of the present disclosure.

Spatially relative terms, such as "below," "lower," "upper," and the like, may be used herein for ease of explanation to describe one element or feature's relationship to another element(s) or feature(s) as illustrated in the figures. It will be understood that the spatially relative terms are intended to encompass different orientations of the device in use or in operation, in addition to the orientation depicted in the figures. For example, if the device in the figures is turned over, elements described as "below" or "under" other elements or features would then be oriented "above" the other elements or features. Thus, the example terms "below" and "under" can encompass both an orientation of above and below. The device may be otherwise oriented (e.g., rotated 90 degrees or at other orientations) and the spatially relative descriptors used herein should be interpreted accordingly.

It will be further understood that the terms "comprises," "comprising," "includes," and "including," when used in this specification, specify the presence of the stated features, integers, steps, operations, elements, and/or components, but do not preclude the presence or addition of one or more other features, integers, steps, operations, elements, components, and/or groups thereof.

As used herein, the term "and/or" includes any and all combinations of one or more of the associated listed items. Unless otherwise apparent from the disclosure, expressions such as "at least one of," "a plurality of," "one of," and other prepositional phrases, when preceding a list of elements, should be understood as including the disjunctive if written as a conjunctive list and vice versa. For example, the expressions "at least one of a, b, or c," "at least one of a, b, and/or c," "one selected from the group consisting of a, b, and c," "at least one selected from a, b, and c," "at least one from among a, b, and c," "one from among a, b, and c", "at least one of a to c" indicates only a, only b, only c, both a and b, both a and c, both b and c, all of a, b, and c, or variations thereof.

In the present disclosure, when particles are spherical, "diameter" indicates a particle diameter or an average particle diameter, and when the particles are non-spherical, the "diameter" indicates a major axis length or an average major axis length. The diameter (or size) of the particles may be measured utilizing a scanning electron microscope or a particle size analyzer. As the particle size analyzer, for example, HORIBA, LA-950 laser particle size analyzer, may be utilized. When the size of the particles is measured utilizing a particle size analyzer, the average particle diameter (or size) is referred to as D50. D50 refers to the average diameter (or size) of particles whose cumulative volume corresponds to 50 volume% (vol%) in the particle size distribution (e.g., cumulative distribution), and refers to the value of the particle size corresponding to 50% from the smallest particle when the total number of particles is 100% in the distribution curve accumulated in the order of the smallest particle size to the largest particle size.

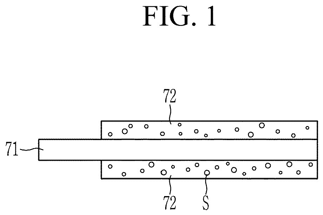

FIG. 1 is a schematic cross-sectional view of a positive electrode for a rechargeable battery according to one or more embodiments of the present disclosure.

As shown in FIG. 1, a positive electrode for a rechargeable battery 70 according to one or more embodiments includes a substrate 71 and a positive active material layer 72 formed on the substrate 71. The positive active material layer 72 may be formed on one or both surfaces (e.g., opposite surfaces) of the substrate 71.

The positive active material layer 72 is compressed after coating a positive active material and may include pores S. The positive active material may be coated at a loading level (L/L) of 40 mg/cm² to 60 mg/cm² and then compressed by a compression ratio of 69 volume% to 73 volume%. The compression ratio is a ratio of the thickness of the active material layer after being rolled to the thickness of the active material layer before being rolled (*e.g*., rolled electrode plate thickness/coating thickness). In one or more embodiments, the compression ratio of the positive active material layer (*e.g.*, the ratio or rate of the pre-rolled to post rolled volume of the positive active material layer) is 69 volume% to 73 volume% (*e.g*., (69:100 to 73:100) x 100).

According to one embodiment compression ratio of the positive active material layer is 69 volume% to 73 volume%, wherein the compression ratio is a ratio of the thickness of the active material layer after being rolled to the thickness of the active material layer before being rolled (*e.g*., rolled electrode plate thickness/coating thickness).

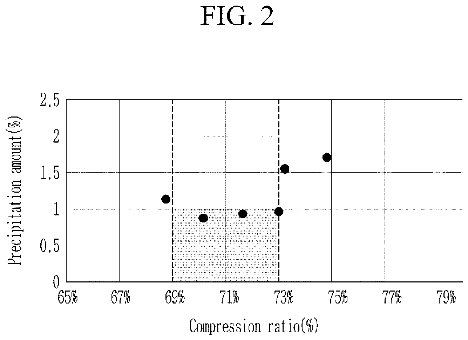

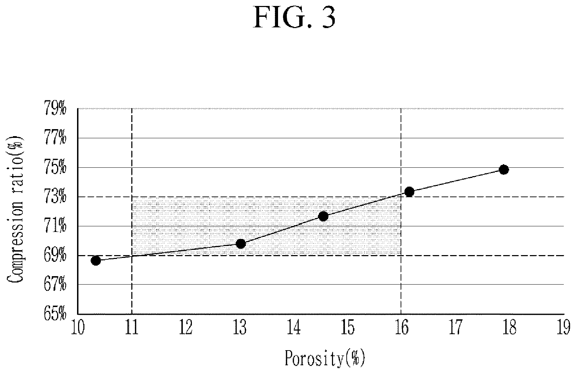

FIG. 2 is a graph measuring an amount of precipitation depending on a compression ratio of a positive active material layer according to one or more embodiments of the present disclosure. FIG. 3 is a graph measuring a pore ratio and a compression ratio of a positive active material layer according to one or more embodiments of the present disclosure.

Referring to FIG. 2, it may be confirmed that if (*e.g*., when) the compression ratio is in the 69% to 73% range, the amount of precipitation is at or less than 1 weight percent (wt%), and if (*e.g*., when) the compression ratio is less than 69% or more than 73%, the amount of precipitation substantially exceeds 1 wt%.

At this time, as shown in FIG. 3, it may be seen that the pore ratio is in the range of 11 volume% to 16 volume%.

Rapid charging is improved with less lithium precipitation, and in one or more embodiments, the compression ratio is set to 69 volume% to 73 volume% and the pore ratio is maintained at 11 volume% to 16 volume%, thereby maintaining the amount of lithium precipitation at less than 1 wt%.

The particle average diameter D50 of the positive active material layer 72 (*e.g*., the average particle diameter of particles in the positive active material layer 72) may be 8 micrometers (µm) to 20 µm, and the pore ratio may be 11 volume% to 16 volume%.

An average diameter may be an average particle diameter D50, and unless otherwise defined in this specification, the average particle diameter D50 refers to a diameter of particles with a cumulative volume of 50 volume% in a particle size distribution.

The average particle size D50 may be measured by a method generally available and/or suitable to persons of ordinary skill in the art. For example, it may be measured with a particle size analyzer, a transmission electron microscope image, or a scanning electron microscope image. As another method, it may be measured with a device utilizing dynamic light-scattering, or data analysis may be performed to count the number of particles for each particle size range to obtain the average particle diameter D50 value.

In the positive active material layer 72, the pores with a diameter of 0.2 to 0.5 µm are referred to as first pores, and the remaining pores outside the diameter size of the first pores are referred to as second pores, the volume occupied by the first pores relative to the entire volume of the pores included in the positive active material layer may be a ratio of 55 volume% to 65 volume%.

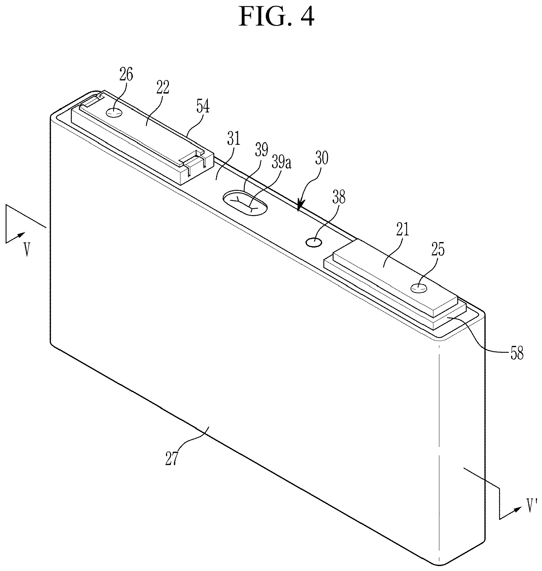

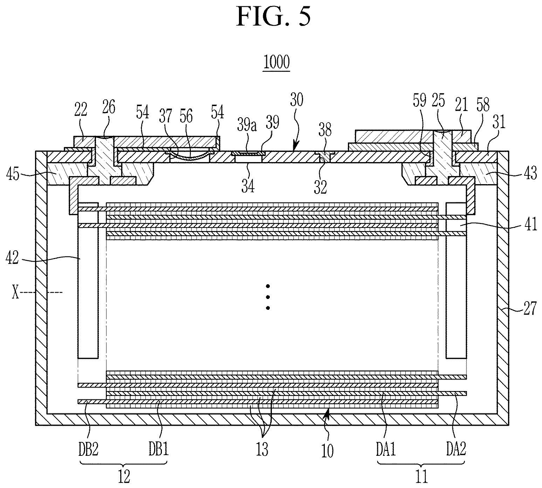

FIG. 4 is a schematic perspective view of a rechargeable battery according to one or more embodiments of the present disclosure. FIG. 5 is a view taken along the line V-V' of FIG. 4, according to one or more embodiments of the present disclosure.

As shown in FIG. 4 and FIG. 5, a rechargeable battery 1000 according to one or more embodiments includes an electrode assembly 10, a case 27 accommodating the electrode assembly 10, and a cap assembly 30 installed in the opening of the case 27.

The electrode assembly 10 includes a positive electrode 11 and a negative electrode 12 that are sequentially accumulated (e.g., stacked or rolled together), and a separator 13 positioned therebetween. The separator 13 is placed between the positive electrode 11 and the negative electrode 12 to insulate them from each other.

The electrode assembly 10 may be a jelly roll type or kind by interposing the separator 13 between the positive electrode (or first electrode) 11 and the negative electrode (or second electrode) 12, winding them around a winding axis X then, and pressing them to be flat (substantially flat).

The separator 13 may be a polymer film that allows lithium ions to pass through, and may be made of polyethylene, polypropylene, polyvinylidene fluoride, or a multilayer of two or more layers thereof, as well as mixed multilayers such as a polyethylene/polypropylene two-layer separator, polyethylene/polypropylene/polyethylene three-layer separator, and polypropylene/polyethylene/polypropylene three-layer separator and/or the like.

The positive electrode 11 may be a positive electrode shown in FIG. 1, and includes an electrode active region DA1 and an electrode passive region DA2. The electrode active region DA1 includes a substrate formed of a thin plate metal foil and a positive active material layer made of a positive active material on the substrate. The electrode passive region DA2 is a region where the substrate is exposed because the positive active material layer is not formed thereon, and may be a part extending from the substrate of the electrode active region.

The electrode passive region DA2 of the positive electrode may be positioned at one end of the positive electrode 11 along the length of the positive electrode 11.

The substrate of the positive electrode 11 may be aluminum, and as the positive electrode active material, a compound (lithiated intercalation compound) capable of reversibly intercalating and deintercalating lithium ions may be utilized. For example, one or more types (kinds) of composite oxides of metals of (*e.g*., selected from among) cobalt, manganese, nickel, and/or combinations thereof with lithium may be utilized. In the positive electrode, the content (*e.g*., amount) of the positive active material may be 90 weight percent (wt%) to 98 wt% with respect to the entire weight of the positive active material layer.

In one or more embodiments, the positive active material may further include a binder and a conductive material. In one or more embodiments, the content (*e.g*., amount) of the binder and the conductive material may be 1 wt% to 5 wt%, respectively, relative to the total weight of the positive active material layer.

The binder serves to adhere the positive active material particles to each other and also to adhere the positive active material to the positive electrode substrate. Representative examples of the binder may include polyvinyl alcohol, carboxymethylcellulose, hydroxypropyl cellulose, diacetyl cellulose, polyvinyl chloride, carboxylated polyvinyl chloride, polyvinyl fluoride, and/or polymers including ethylene oxide, polyvinylpyrrolidone, polyurethane, polytetrafluoroethylene, polyvinylidene fluoride, polyethylene, polypropylene, styrene-butadiene rubber, acryl federated styrene-butadiene rubber, epoxy resin, and nylon, but the present disclosure is not limited thereto.

The conductive material is utilized to provide conductivity to the electrodes, and in the configured battery, any material may be utilized as an electron conductive material as long as it does not cause a chemical change.

The negative electrode 12 includes an electrode active region DB1 and an electrode passive region DB2, and the electrode active region DB1 includes a substrate formed of a metal foil of a thin plate and a negative active material layer made of a negative active material on the substrate (or on an intermediate layer). The electrode passive region is a region where the substrate is exposed because the negative active material layer is not formed, and may be a portion extended from the substrate of the electrode active region.

The electrode passive region DB2 of the negative electrode may be positioned at one end of the negative electrode 12 along the length direction of the negative electrode 12. In one or more embodiments, the electrode passive region DA2 of the positive electrode 11 and the electrode passive region DB2 of the negative electrode may be positioned on opposite sides with respect to the electrode active regions DA1 and DB1.

Of course, the electrode passive regions of the positive electrode and the negative electrode may protrude at a regular interval along the wound direction from the substrate, or may be positioned at the tip or end of the wound electrode assembly.

The substrate of the negative electrode 12 may be a material of (*e.g*., selected from among) the group including (*e.g*., consisting of) a copper foil, a nickel foil, a stainless steel foil, a titanium foil, a nickel foam, a copper foam, a polymer substrate coated with a conductive material, and/or any suitable combination thereof.

The negative active material included in the negative active material layer may be a carbon-based active material. The carbon-based negative active material may be artificial graphite or a mixture of an artificial graphite and a natural graphite. If (*e.g*., when) the negative active material is a crystalline carbon-based material obtained by mixing natural graphite with artificial graphite, the crystalline carbon-based material may have more developed crystalline characteristics than an amorphous carbon-based active material and thus may further improve orientation characteristics of the carbon material in an electrode plate having an external magnetic field. The artificial graphite or natural graphite may be amorphous, sheet-shaped, flake-shaped, spherically shaped, fiber-shaped, and/or any suitable combination thereof without a particular limit. Additionally, if (*e.g*., when) utilizing a mixture of artificial graphite and natural graphite, a mixing ratio (in wt% of artificial graphite : natural graphite) may be 70:30 (wt%) to 95:5 (wt%).

In one or more embodiments, the negative active material layer may include at least one of an Si-based negative active material, an Sn-based negative active material, or an LiMOx-based negative active material (M = metal). If (*e.g*., when) the negative active material layer further includes a carbon-based negative active material as the first negative active material and the negative active material described above as the second negative active material, the mixing ratio of the first negative active material and the second negative active material (in wt% of the first negative active material: the negative second active material) may be 50:50 (wt%) to 99:1 (wt%).

The LiMOx-based negative active material may be a lithium vanadium oxide (M = metal).

The Si-based negative active material may be Si, an Si-C composite, SiOₓ (0 < x < 2), or an Si-Q alloy (Q is an element of (*e.g*., selected from among) the group including (*e.g*., consisting of) an alkali metal, an alkaline earth metal, a Group 13 element, a Group 14 element, a Group 15 element, a Group 16 element, a transition metal, a rare earth element, and/or any suitable combination thereof), and the Sn-based negative active material may include Sn, SnO₂, and/or an Sn-R alloy (R is an element of (*e.g*., selected from among) the group including (*e.g*., consisting of) an alkali metal, an alkaline earth metal, a Group 13 element, a Group 14 element, a Group 15 element, a Group 16 element, a transition metal, and/or a rare earth element, and does not include Sn), and at least one of them may be mixed with SnO₂. The element Q and the element R may be at least one element of (*e.g*., at least one element selected from among) the group including (*e.g*., consisting of) Mg, Ca, Sr, Ba, Ra, Sc, Y, Ti, Zr, Hf, Rf, V, Nb, Ta, Db, Cr, Mo, W, Sg, Pb, Pt, Cu, Ag, Au, Zn, Cd, B, Al, Ga, Sn, In, Tl, Ge, P, As, Sb, Bi, S, Se, Te, Po, and/or any suitable combination thereof. In present disclosure, "not include a or any 'component'" "exclude a or any 'component'", "'component'-free", and/or the like refers to that the "component" not being added, selected or utilized as a component in the composition, but the "component" of less than a suitable amount may still be included due to other impurities and/or external factors.

A content (e.g., amount) of the negative active material in the negative active material layer may be 95 wt% to 99 wt% based on a total weight of the negative active material layer.

The negative active material includes a binder, and may optionally further include a conductive material. The content (*e.g*., amount) of the binder in the negative active material may be 1 wt% to 5 wt% based on the total weight of the negative active material. In one or more embodiments, if (*e.g*., when) the conductive material is further included, the negative active material may be utilized in an amount of 90 wt% to 98 wt%, the binder may be utilized in an amount of 1 wt% to 5 wt%, and the conductive material may be utilized in an amount of 1 wt% to 5 wt%.

The binder serves to adhere the negative active material particles to each other and also to adhere the negative active material to the negative base substrate. As the binder, a non-aqueous binder, an aqueous binder, and/or any suitable combination thereof may be utilized.

Examples of non-aqueous binders may include polyvinyl chloride, carboxylated polyvinyl chloride, polyvinyl fluoride, a polymer including ethylene oxide, polyvinyl pyrrolidone, polyurethane, polytetrafluoroethylene, polyvinylidene fluoride, polyethylene, polypropylene, polyamide-imide, polyimide, and/or any suitable combination thereof.

Examples of aqueous binders may include styrene-butadiene rubber, acrylated styrene-butadiene rubber (SBR), acrylonitrile-butadiene rubber, acryl rubber, butyl rubber, an ethylene-propylene copolymer, polyepichlorohydrin, polyphosphazene, polyvinyl pyridine, chlorosulfonated polyethylene, latex, a polyester resin, an acryl resin, a phenol resin, an epoxy resin, a polyvinyl alcohol, an acrylate resin, and/or any suitable combination thereof.

If (*e.g*., when) the aqueous binder is utilized as a negative binder, a cellulose-based compound capable of imparting viscosity may be further included as a thickener. As the cellulose-based compound, carboxymethyl cellulose, hydroxypropyl methyl cellulose, methyl cellulose, an alkali metal salt thereof, and/or the like may be utilized in combination. As the alkali metal, Na, K, or Li may be utilized. A content (*e.g*., amount) of the thickener may be 0.1 to 3 parts by weight based on 100 parts by weight of the negative active material.

The conductive material is utilized to impart conductivity to the electrode, and any electronic conductive material that does not cause a chemical change in the battery may be utilized. Examples of the conductive material may include a carbon-based material such as natural graphite, artificial graphite, carbon black, acetylene black, ketjen black, and carbon fiber; a metal powder such as copper, nickel, aluminum, and silver; a metal-based material such as metal fiber; a conductive polymer such as polyphenylene derivative; and a conductive material containing (including) any suitable mixture thereof.

A BET-specific surface area of the negative electrode active material layer may be less than 3.0 m²/g and may range from 0.6 m²/g to 1. 2m²/g. If (*e.g*., when) the BET-specific surface area of the negative electrode active material layer is less than 3.0m²/g, electrochemical lifespan characteristics of a cell may be improved.

The BET measurement is made by charging/discharging the lithium rechargeable battery including the negative electrode, cutting the negative electrode obtained by breaking the battery in a completely discharged state into a set or predetermined size, and subsequently putting the cut negative electrode into a BET sample holder, and measuring it by a nitrogen gas absorption method.

The negative electrode may have a sectional loading level (L/L) of 6 mg/cm² to 65 mg/cm².

In one or more embodiments, the electrode assembly 10 may be accommodated in the case 27 together with an electrolyte, and the electrolyte may include a non-aqueous organic solvent and a lithium salt.

The non-aqueous organic solvent serves as a medium through which ions involved in the electrochemical reaction of the battery can move.

The lithium salt is dissolved in an organic solvent and acts as a supply source of lithium ions in the battery, enabling basic lithium secondary battery operation, and is a material that promotes the movement of lithium ions between the positive and negative electrodes. Representative examples of such lithium salts include one or two or more of (*e.g*., selected from among) the group including (*e.g*., consisting of) LiPF₆, LiBF₄, LiSbF₆, LiAsF₆, LiN (SO₂ C₂F₅)₂, Li (CF₃SO₂)₂N, LiN (SO₃C₂F₅)₂, LiC₄F₉SO₃, LiClO₄, LiAlO₂, LiAlCl₄, LiN (CₓF₂ₓ₊₁ SO₂), (C_{y}F_{2y+1} SO₂), (where ₓ and _{y} are natural numbers, such as an integer of 1 to 20), LiCl, LiI and/or LiB C₂O₄₂ (lithium bis(oxalato) borate: LiBOB) as a supporting electrolytic salt. It is recommended to utilize a lithium salt concentration within the range of 0.1M to 2.0M. If (*e.g.*, when) the concentration of lithium salt is in that range, the electrolyte has appropriate or suitable conductivity and viscosity, so it can exhibit excellent or suitable electrolyte performance, and lithium ions can move effectively.

The case 27 may be made of a metal such as aluminum, and may be roughly cuboidal in shape. One side of the case 27 may be opened, and a cap plate may be installed on the opened side of the case 27.

The cap assembly 30 includes a cap plate 31 coupled to the case 27 and blocking the opening of the case 27, a positive terminal 21 protruded to the outside of the cap plate 31 and electrically connected to the positive electrode 11, and a negative terminal 22 electrically connected to the negative electrode 12.

The cap plate 31 is in the form of an elongated plate connected in one direction and is connected to the opening of case 27.

The cap plate 31 has an injection port 32 that penetrates to the inside of the case 27. The injection port 32 is for injecting an electrolyte solution, and a sealing stopper 38 may be installed. In one or more embodiments, a vent plate 39 on which a notch 39a is formed is installed in a vent hole 34 so that the cap plate 31 may be opened at a set or predetermined pressure.

The positive terminal 21 and the negative terminal 22 are installed to protrude to (be protruded onto) the top of the cap plate 31. The positive terminal 21 is electrically connected to the positive electrode 11 through a current collecting tab 41, and the negative terminal 22 is electrically connected to the negative electrode 12 through a current collecting tab 42.

A terminal connection member 25 to electrically connect the positive terminal 21 and the current collecting tab 41 is installed between the positive terminal 21 and the current collecting tab 41. The terminal connection member 25 is inserted into the hole formed in the positive terminal 21, and the upper end is welded to the positive terminal 21, and the lower end is welded to the current collecting tab 41.

A gasket 59 for sealing is installed between the terminal connection member 25 and the cap plate 31 by being inserted into a hole through which the terminal connection member 25 passes, and a lower insulating member 43 into which the lower part of the terminal connection member 25 is inserted is installed below the cap plate 31. A connection plate 58 is installed between the positive terminal 21 and the cap plate 31 to electrically connect them. The terminal connection member 25 is inserted and installed into the connection plate 58. Accordingly, the cap plate 31 and the case 27 are charged with the positive electrode 11.

A terminal connection member 26 that electrically connects the negative terminal 22 and the current collecting tab 42 is installed between the negative terminal 22 and the current collecting tab 42. The terminal connection member 26 is inserted into the hole formed in the negative terminal 22, and the upper end is welded to the negative terminal 22, and the lower end is welded to the current collecting tab 42.

A gasket 59 for sealing is installed between the negative terminal 22 and the cap plate 31 by being inserted into the hole through which the terminal connection member 26 passes, and an upper insulating member 54 is installed to insulate between the negative terminal 22 and the cap plate 31. The terminal connection member 26 may be installed by being inserted into a hole of the upper insulating member 54, and the upper insulating member 54 may be formed to surround the end of the negative terminal 22.

Below the cap plate 31, a lower insulation member 45 is installed to insulate the negative terminal 22 and the current collecting tab 42 from the cap plate 31.

A shorting hole 37 is formed in the cap plate 31, and a shorting member 56 is installed in the shorting hole 37. The shorting member 56 includes a curved portion convexly curved downward in an arc shape and an edge portion formed on the outside of the curved portion and fixed to the cap plate 31. The upper insulation member 54 may have an incision that overlaps the shorting hole 37, and the shorting member 56 overlaps the negative terminal 22 exposed through the incision.

The shorting member 56 is electrically connected to the cap plate 31, and is deformed if (*e.g*., when) an internal pressure of the rechargeable battery 1000 rises, thereby causing a short circuit between the positive electrode and the negative electrode. For example, if (*e.g*., when) gas is generated inside the rechargeable battery because of an abnormal reaction, internal pressure of the rechargeable battery increases. If (*e.g*., when) the internal pressure of the rechargeable battery exceeds a set or predetermined pressure, the curved portion is transformed to be convex in an upward direction, and the negative terminal 22 touches the shorting member 56 to cause a short circuit.

To facilitate the short circuit of the negative terminal 22 and the shorting member 56, the negative terminal 22 may further include at least one or more protrusions protruded toward the shorting member 56, and the protrusion may be separated from the shorting member 56.

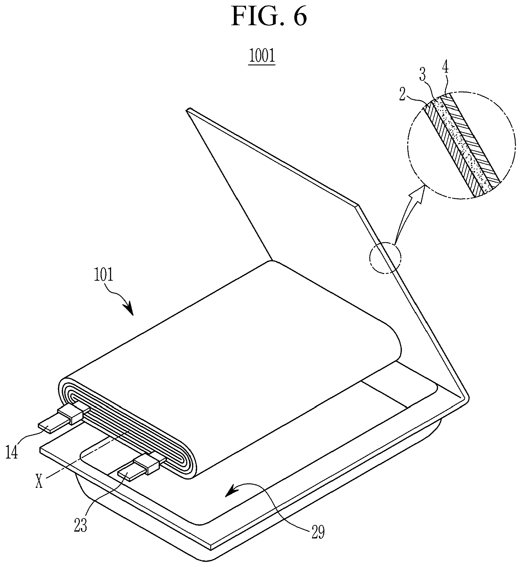

FIG. 6 is a schematic exploded perspective view of a rechargeable battery according to one or more embodiments of the present disclosure.

As shown in FIG. 6, a rechargeable battery 1001 according to one or more embodiments includes an electrode assembly 101 and a pouch.

The electrode assembly 101 may include a positive electrode and a negative electrode, and a separator positioned between the positive electrode and the negative electrode. The electrode assembly 101 may be in the form of a jelly roll wound around a winding axis (X).

The positive electrode may be the positive electrode shown in FIG. 1, and may include a substrate and a positive active material layer formed on the substrate and having a pore ratio of 11 volume% to 16 volume% and an average diameter D50 of particles in the positive active material layer of 8um to 20um.

A first electrode tab 14 and a second electrode tab 23 may be connected to the electrode passive regions of the positive electrode and the negative electrode, respectively.

The electrode assembly 101 may be contained in a pouch-type or kind case together with the electrolyte. The pouch-type or kind case may be formed of a laminate exterior, and the exterior may include a lower exterior and an upper exterior, and the electrode assembly 101 is placed between them and then sealed by thermal melting.

The laminate exterior may be formed as a multi-layer structure with, for example, a first insulation layer 2, a metal layer 3 and a second insulation layer 4. Of course, one or more suitable other adhesive layers or functional layers may be added.

The first insulating layer 2 is formed of a material that is insulating and thermally bondable to the inner surface of the laminate exterior, and may be sealed by thermally melting the edge in a state in which the electrode assembly 101 is received in the pouch. Additionally, the first insulation layer 2 is formed on one surface of the metal layer 3 and forms the inner surface of the laminate exterior facing the electrode assembly 101. The first insulating layer 2 may be formed of cast polypropylene (CPP) that does not react with the electrolyte solution and or its equivalent.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

As used herein, the term "substantially," "about," and similar terms are used as terms of approximation and not as terms of degree, and are intended to account for the inherent deviations in measured or calculated values that would be recognized by those of ordinary skill in the art. "Substantially" as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "substantially" may mean within one or more standard deviations, or within ± 30%, 20%, 10%, 5% of the stated value.

Also, any numerical range recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

Further, the use of "may" when describing embodiments of the present disclosure refers to "one or more embodiments of the present disclosure."

As used herein, the singular forms "a," "an" and "the" are intended to include the plural forms as well, unless the context clearly indicates otherwise.

The portable device, vehicle, and/or the battery, *e.g*., a battery controller, and/or any other relevant devices or components according to embodiments of the present disclosure described herein may be implemented utilizing any suitable hardware, firmware (*e.g*., an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the embodiments of the present disclosure.

Although the embodiments of the present disclosure have been described, it is understood that the present disclosure should not be limited to these embodiments, but one or more suitable changes and modifications can be made by one ordinary skilled in the art within the scope of the present disclosure as defined by the following claims and equivalents thereof.

### Reference Numerals

| | | | |
|---|---|---|---|
| 10, 100: | electrode assembly | 11, 70: | positive electrode |
| 12: | negative electrode | 13: | separator |
| 21: | positive terminal | 14, 23: | electrode |
| 22: | negative terminal | 41, 42: | current collecting tab |
| 27: | case | 30: | cap assembly |
| 71: | substrate | 72: | positive active material layer |
| 200: | pouch | 1000, 1001: | rechargeable battery |

## Claims

1. A positive electrode comprising:
a substrate, and
a positive active material layer on at least one surface of the substrate and comprising particles,
wherein a pore ratio of the positive active material layer is 11 volume% to 16 volume%, and an average diameter D50 of the particles is 8 µm to 20 µm, and
wherein the positive electrode is for a battery.

2. The positive electrode of claim 1, wherein a loading level (L/L) of the positive active material layer is 40 mg/cm² to 60 mg/cm².

3. The positive electrode of claim 1 or 2, wherein:
the positive active material layer comprises a first pore and a second pore of different sizes, and
a diameter of the first pore is 0.2 um to 0.5 um.

4. The positive electrode of claims 1 to 3, wherein the first pore is 55 volume% to 65 volume% of the entire pore volume of the positive active material layer.

5. The positive electrode of claims 1 to 4, wherein a compression ratio of the positive active material layer is 69 volume% to 73 volume%.

6. The positive electrode of claims 1 to 5, wherein the substrate comprises aluminum.

7. A electrode assembly comprising the positive electrode of claims 1 to 6.

8. A rechargeable battery comprising:
an electrode assembly comprising the positive electrode of claims 1 to 6,
a case in which the electrode assembly is accommodated,
an electrolyte in the case, and
a cap assembly coupled to the case and sealing the case.

9. The rechargeable battery of claim 8, wherein the case is a pouch.
